(19) Europäisches Patentamt
European Patent Office
Office européen des brevets

(11) **EP 2 202 534 B1**

(12) **FASCICULE DE BREVET EUROPEEN**

(45) Date de publication et mention
de la délivrance du brevet:
**25.02.2015 Bulletin 2015/09**

(51) Int Cl.:
***G01S 13/72*** *(2006.01)*   ***G01S 13/91*** *(2006.01)*
***G08G 5/00*** *(2006.01)*

(21) Numéro de dépôt: **09177900.9**

(22) Date de dépôt: **03.12.2009**

(54) **Méthode de traîtement de poursuite multi-capteur à temps de latence reduit**

Methode zur Verarbeitung einer Multisensor-Verfolgung mit reduzierter Latenzzeit

Processing method of multi-sensor tracking with reduced latency period

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.12.2008 FR 0807061**

(43) Date de publication de la demande:
**30.06.2010 Bulletin 2010/26**

(73) Titulaire: **Thales**
**92200 Neuilly Sur Seine (FR)**

(72) Inventeurs:
• **Baud, Olivier**
**92130, ISSY LES MOULINEAUX (FR)**
• **Honore, Nicolas**
**75015, PARIS (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 926 511**    **EP-A2- 0 351 654**
**US-B1- 6 573 858**

• **S. S. BLACKMAN: "Multiple-Target Tracking with Radar Applications (Chapters. 3 and 13)" 1 janvier 1986 (1986-01-01), DEDHAM ARTECH HOUSE INC , XP002541259 * page 55, ligne 1 - ligne 5 * * page 357, ligne 16 - ligne 18 * * figure 13.4 ***
• **BLACKMAN ET AL: "Multiple-Target Tracking with Radar Applications, Chapters 9 and 10" MULTIPLE-TARGET TRACKING WITH RADAR APPLICATIONS, XX, XX, 1 janvier 1986 (1986-01-01), pages 249-307, XP002277516**

EP 2 202 534 B1

**Description**

La présente invention concerne une méthode de traitement de poursuite multi-capteur à temps de latence réduit. Elle concerne notamment les systèmes de pistage d'aéronefs mis en oeuvre dans la gestion du trafic aérien.

Le contrôle du trafic aérien, ou ATC selon l'acronyme de Air Traffic Control, permet à des contrôleurs aériens d'assurer l'exécution sûre, rapide et efficace des vols d'aéronefs dans l'espace aérien sous surveillance.

Son rôle est principalement de prévenir les collisions entre les aéronefs et le sol ou les véhicules, ainsi que les collisions en vol entre aéronefs. Il consiste aussi à accélérer et ordonner la circulation aérienne, à fournir aux aéronefs les avis et renseignements utiles à l'exécution sûre et efficace du vol, tels que les informations météorologiques, l'information sur l'état des moyens au sol de navigation, l'information sur le trafic. Il consiste enfin à fournir un service d'alerte pour prévenir les organismes appropriés lorsque les aéronefs ont besoin de l'aide des organismes de secours et de sauvetage, et à prêter à ces organismes le concours nécessaire. EP 0 926 511 décrit un exemple de système ATC basé sur une méthode améliorée de corrélation concernant notamment des cibles dont les trajectoires se croisent. Un autre exemple de système ATC est décrit dans EP 0 351 654 qui propose une méthode de conversion de coordonnées pour un système de contrôle de trafic aérien.

Les données nécessaires à la gestion du contrôle du trafic aérien proviennent essentiellement d'une pluralité de capteurs. Parmi ces capteurs, des radars primaires de surveillance ou PSR selon l'acronyme de Primary Surveillance Radars, fournissent des échos de cibles, via des informations d'azimut, de distance et de l'instant de détection.

Des données sont aussi fournies par des radars secondaires de surveillance ou SSR selon l'acronyme de Secondary Surveillance Radars ; un SSR envoie des signaux à des cibles. Lorsque ces cibles sont des aéronefs équipés de transpondeurs, ces derniers envoient en retour des informations, qui sont reçues par le SSR. Les informations reçues par le SSR comprennent la distance et l'azimut, ainsi que les informations complémentaires fournies par le transpondeur selon son type. Ainsi un transpondeur compatible avec le mode A/C fournit une donnée d'identification de l'aéronef (mode A), et une donnée d'altitude barométrique (mode C). L'ensemble des données fournies par un SSR permet donc une identification des aéronefs évoluant dans son champ de vision, ainsi que la connaissance de leurs positions respectives dans un repère tridimensionnel. Il existe encore des transpondeurs équipés d'un mode perfectionné ou Mode S, fournissant sur requête les mêmes données que le mode A/C, en plus d'une identification univoque de l'aéronef codée sur 24 bits, et de moyens de communication bilatérale de données diverses. Le document US 6,573,858 propose une méthode de poursuite multi-capteur utilisant de tels capteurs PSR et/ou SSR.

D'autres données de localisation d'aéronefs et objets au sol sont fournis par des capteurs de multilatération ou MLAT, consistant en une pluralité d'antennes omnidirectionnelles disséminées sur le sol, recevant des signaux envoyés par un aéronef afin de le localiser. Ces signaux peuvent être non sollicités, ou bien envoyés par l'aéronef en réponse à des signaux provenant de radars. Des calculs portant sur les différences entre les temps de réception de ces signaux par au moins deux antennes permettent de déterminer la position de l'aéronef. Ce type de capteur est largement utilisé pour la surveillance de mouvements au sol dans des zones d'aéroport et dans les zones d'approche. Une autre technique procédant d'une manière similaire est utilisée pour la localisation d'aéronefs en dehors de zones d'approche d'aéroports, basée sur les signaux reçus par une pluralité d'antennes omnidirectionnelles disposées sur des zones géographiques beaucoup plus larges ; cette technique porte le nom de WAM, selon l'acronyme pour Wide Area Multilateration.

Il existe aussi des systèmes de surveillance automatique et dépendante des aéronefs, connus sous les acronymes d'ADS pour Automatic Dependent Surveillance. Un premier système d'ADS, dénommé ADS-C selon l'acronyme pour Automatic Dependent Surveillance - Contract, est utilisé essentiellement pour les zones dans lesquelles peu de capteurs d'autres types sont disponibles, par exemple les zones désertiques ou océaniques. Les aéronefs qui en sont équipés radiodiffusent vers un satellite de communication des données relatives à leur position, par exemple déterminée par un calculateur embarqué sur la base de données fournies par un récepteur de géo-localisation par satellite ou GPS selon l'acronyme pour Global Positioning System, et/ou par une centrale inertielle. D'autres données sont diffusées, telles que des données sur la route envisagée par l'aéronef, les vitesses de l'aéronef par rapport à l'air et au sol, des données météorologiques (force et direction du vent, température, etc...). La diffusion de ces données par l'aéronef peut se faire de manière périodique, ou bien en réaction à certains évènements, ou encore en cas de situation d'urgence. Les données sont ensuite transmises par le satellite et sont reçues par une antenne dédiée.

Un second système d'ADS est dénommé ADS-B selon l'acronyme pour Automatic Dependent Surveillance - Broadcast. Les aéronefs qui en sont équipés radiodiffusent les données décrites précédemment en référence à l'ADS-C, directement vers une antenne au sol. La transmission se fait de manière périodique, à une fréquence bien plus élevée, d'au moins une émission par seconde.

La poursuite multi-capteur, ou pistage multi-capteur, est le processus qui, à partir d'une pluralité de détections transmises par différents capteurs parmi les capteurs précités, permet :

- de reconnaître parmi les détections à sa disposition, celles qui échantillonnent la trajectoire de chaque aéronef présent dans la couverture de détection de chaque capteur,

- de reconstituer le plus précisément possible les trajectoires des aéronefs, c'est-à-dire les pistes multi-radars.

On parle de poursuite multi-radar, ou pistage multi-radar, lorsque les capteurs sont des radars, notamment de type PSR ou SSR.

La poursuite multi-radar est généralement basée sur une technique de fusion de détections radar ou MPVU, selon l'acronyme pour Multiple Plot - Variable Update. Par cette technique, chaque point, ou "plot", issu de la détection d'un même aéronef est traité le plus rapidement possible, afin de mettre à jour la piste multi-radar correspondante dans les meilleurs délais. Il existe d'autres méthodes connues de poursuite multi-radar, mais parmi elles, la MPVU est celle qui procure la plus grande précision. Néanmoins cette précision suppose une relative complexité des calculs opérés par le système de pistage. Une complexité des calculs entraîne une forte latence introduite par le système de pistage, cette latence pouvant être définie comme la différence de temps calculée entre le moment de sortie de l'information du système de pistage, et le moment de réception des données d'entrée.

Le TIS-B, acronyme pour Traffic Information Service - Broadcast, est un service permettant de diffuser des informations de trafic à des systèmes aéroportés, et notamment à des pilotes d'aéronefs. La diffusion d'informations est assurée par des stations au sol émettant depuis le sol vers l'air, des informations de surveillance. Le TIS-B ne requiert pas de transmission d'informations ou d'accusés de réception de messages TIS-B par les aéronefs. En revanche, pour que le système soit efficace, il est indispensable que le temps de latence de toute la chaîne de transmission des informations soit faible. Le temps de latence de toute la chaîne de transmission comprend le temps à compter depuis la réception de l'information par les divers radars et capteurs, en passant par le traitement de l'information par les radars et capteurs, la transmission de l'information jusqu'au centre de contrôle du trafic aérien, le traitement des données d'entrée au niveau du centre de contrôle du trafic aérien, le traitement des données à proprement parler par le système de pistage multi-capteur ou MSTS selon l'acronyme de Multi-Sensor Tracking System, puis le traitement des données de sortie, leur diffusion, et jusque la réception par les aéronefs évoluant dans l'espace d'intérêt. Le temps de latence total maximal acceptable est défini par exemple aux Etats-Unis par la norme: DO-286B - TIS-B MASPS (Traffic Information Service - Broadcast -- Minimum Aviation System Performance Specifications).

Le temps de latence introduit par un système de pistage multi-radar opérant sur la base des techniques actuelles est tel, qu'à lui seul il contribue de manière rédhibitoire au temps de latence total de toute la chaîne de transmission, rendant impossible la conformité avec la norme DO-286B - TIS-B MASPS précitée.

De plus, les temps de latence liés à la ligne de transmission depuis un radar jusqu'au centre ATC peuvent être très variables pour une ligne donnée, et ainsi imposer aux systèmes de poursuite le recours à des secteurs de mémoire tampon additionnels, ce qui allonge le temps de latence introduit par le système de pistage ; cet inconvénient est connu sous le nom de "time disorders".

Un autre inconvénient des traitements d'informations en provenance de radars, ayant un impact négatif sur le temps de latence introduit par le système de pistage, est lié au fait qu'il est nécessaire pour le système d'attendre des signaux spécifiques de la part des radars, indiquant que tous les plots d'un secteur donné ont été envoyés, avant de commencer le traitement sur les plots de ce secteur.

L'ouvrage de S.S. Blackman intitulé "Multiple-Target Tracking with Radar Applications" décrit des méthodes de poursuite de cibles dans des applications radar.

Un but de la présente invention est de pallier les inconvénients précités, en proposant une méthode de réduction du temps de latence introduit par le système de pistage multi-capteur dans le cadre du contrôle du trafic aérien rendant possible la conformité des systèmes de pistage multi-capteur de type MPVU avec la norme précitée, en ce qui concerne le temps maximal de latence acceptable dans un système de type TIS-B.

En outre, un autre avantage procuré par la présente invention pallie un inconvénient lié aux traitements d'informations en provenance de radars, tel que des cibles se déplaçant notamment à des vitesses sol élevées, en proximité du centre d'un radar, qui ne peuvent pas être perçues, ou bien ne peuvent pas être associées à des pistes ; cet inconvénient est lié au découpage de la zone de surveillance en cellules de secteurs angulaires, dont la surface est plus petite en proximité du centre du radar.

A cet effet, l'invention a pour objet une méthode de traitement de poursuite de cibles aériennes évoluant dans un espace d'intérêt détectées par une pluralité de capteurs, caractérisée en ce que :

- les détections en provenance des capteurs sont synthétisées sous la forme de détections d'un unique radar fictif synchronisé par une pluralité de secteurs virtuels internes de durée déterminée,
- la méthode comprend une étape préalable établissant une grille bidimensionnelle d'un plan de projection stéréographique de l'espace d'intérêt, la grille bidimensionnelle étant divisée en une pluralité de cellules de forme rectangulaire,
- le système de pistage mémorise dans une mémoire tampon toutes les détections réalisées pendant au moins un secteur virtuel interne,

- la fonction de corrélation opère une corrélation des détections avec des pistes sur la base d'un premier critère de proximité entre les cellules de la grille bidimensionnelle contenant les détections et les pistes.

Dans un mode de réalisation de l'invention, la méthode de traitement de poursuite multi-capteur décrite plus haut peut-être caractérisée en ce que la fonction de corrélation est déclenchée par un message de fin du secteur virtuel interne, la corrélation étant effectuée sur la base des détections mémorisées durant le secteur virtuel interne.

Dans un mode de réalisation de l'invention, la méthode de traitement de poursuite multi-capteur décrite plus haut peut-être caractérisée en ce qu'elle comprend une fonction d'association associant les détections à des pistes sur la base d'un critère supplémentaire de différence de temps entre l'instant de réception d'une détection radar et l'instant de réception du message de fin de secteur virtuel interne ayant déclenché les traitements de corrélation et d'association, le critère permettant une confirmation de l'association de la détection à la piste, une mise à jour de la piste et la suppression de la détection de la mémoire tampon, si ladite différence de temps est supérieure à un seuil déterminé, le critère permettant de conserver la détection dans la mémoire tampon pour un traitement ultérieur, si la différence de temps est inférieure au seuil déterminé.

Dans un mode de réalisation de l'invention, la méthode de traitement de poursuite multi-capteur décrite plus haut peut-être caractérisée en ce que les cellules de forme rectangulaire ont une forme carrée dont le côté a une longueur prédéterminée.

Dans un mode de réalisation de l'invention, la méthode de traitement de poursuite multi-capteur décrite plus haut peut-être caractérisée en ce que le premier critère de proximité permet d'élire des pistes candidates à la corrélation avec un point donné correspondant à une détection, toutes les pistes situées dans les 8 cellules adjacentes à la cellule contenant le point donné, et dans ladite cellule.

Dans un mode de réalisation de l'invention, la méthode de traitement de poursuite multi-capteur décrite plus haut peut-être caractérisée en ce que le premier critère de proximité permet d'élire des pistes candidates à la corrélation avec un point donné correspondant à une détection, toutes les pistes situées dans les 3 cellules adjacentes à une des 4 sous-divisions identiques de la cellule contenant le point donné, et dans ladite cellule.

L'invention a aussi pour objet un système de contrôle du trafic aérien caractérisé en ce qu'il met en oeuvre une méthode de traitement de poursuite multi-capteur telle que décrite plus haut.

D'autres caractéristiques et avantages de l'invention apparaîtront à la lecture de la description, donnée à titre d'exemple, faite en regard des dessins annexés qui représentent :

- la figure 1, par un schéma synoptique, la structure globale d'un système de contrôle du trafic aérien ;
- la figure 2, par un schéma synoptique, la structure globale d'un système de pistage de type MPVU ;
- la figure 3a, par un diagramme, la structure du noyau d'un système de pistage multi-radar dans un système de pistage de type MPVU ; la figure 3b, un schéma représentant le découpage par secteurs angulaires utilisé dans le traitement des informations fournies par des radars dans le cadre d'un système de contrôle du trafic aérien connu de l'état de la technique ;
- la figure 4, un exemple de diagramme temporel représentant un exemple de séquencement du traitement des données entrantes dans le cadre d'un système de pistage multi-capteur selon l'invention ; et
- les figure 5a et 5b, des schémas représentatifs d'un exemple de procédé de corrélation mis en oeuvre dans un système de pistage multi-capteur selon l'invention.

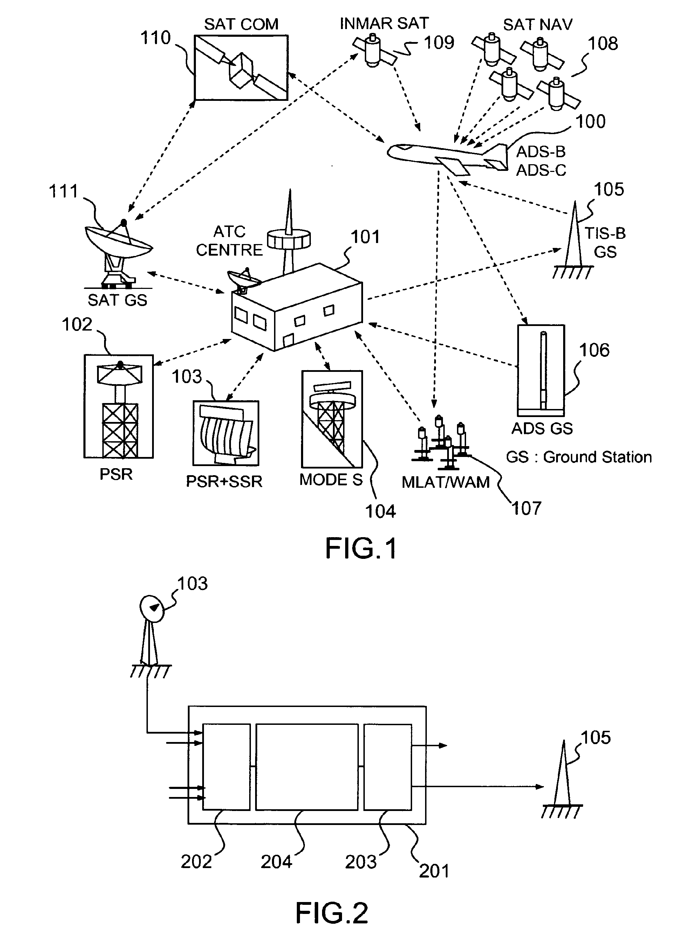

La figure 1 représente, par un schéma synoptique, la structure globale d'un système de contrôle aérien. Un aéronef 100 émet et reçoit des informations de la part et vers une pluralité d'émetteurs et de capteurs. La plupart des informations sont centralisées et traitées au niveau d'un centre de contrôle du trafic aérien ou ATC 101. Dans l'exemple de la figure, un radar primaire de surveillance PSR 102 traite et transmet des données au centre ATC 101. Un radar secondaire de surveillance 103, dans cet exemple monté avec un radar primaire de surveillance, traite et transmet des données au centre ATC 101. Un radar mode S 104 transmet des données au centre ATC 101. L'aéronef 100 émet des signaux spécifiques captés par une station 106 de réception de type ADS située au sol, qui elle-même traite les informations reçues et envoie à son tour des informations au centre ATC 101. L'aéronef 100 émet des signaux spécifiques captés par des capteurs disséminés au sol, de type MLAT et / ou WAM 107, qui traitent les informations reçues et envoient à leur tour des informations au centre ATC 101. Une pluralité de satellites de géo-positionnement 108 de type GPS ou Galileo émettent des signaux qui sont captés par un récepteur dédié de l'aéronef 100. L'aéronef 100 échange des informations avec un satellite Sat Com 110, notamment l'aéronef 100 envoie des rapports de type ADS-C au satellite Sat Com 110. Le satellite Sat Com 110 échange lui-même des informations avec la terre, via une station d'émission / réception satellite 111 au sol, elle-même communiquant avec le centre ATC 101. Un satellite 109 communique avec le sol des informations diverses via la station d'émission / réception 111 et transmet des informations à l'aéronef 100.

Une station au sol d'émission de type TIS-B 105 émet des informations reçues par l'aéronef 100. Les données transmises par la station 105 sont basées sur des données fournies par le centre ATC 101, et sont une synthèse de toutes les données reçues par le centre ATC 101.

La figure 2 présente par un schéma synoptique, la structure globale d'un système de pistage de type MPVU 201 connu de l'état de la technique. Le système de pistage est mis en oeuvre dans une unité de calcul au sein du centre de contrôle du trafic aérien 101. Le système de pistage comprend un dispositif de gestion des données d'entrée 202, un noyau ou Kernel 204, et un dispositif de gestion des données de sortie 203. Le dispositif de gestion des données d'entrée 202 reçoit les données de l'ensemble des radars et capteurs impliqués dans la gestion du trafic aérien, dont notamment le radar SSR 103, mais aussi des radars primaires 102, des données en provenance de balises MLAT et WAM 107, de rapports ADS-B, etc...

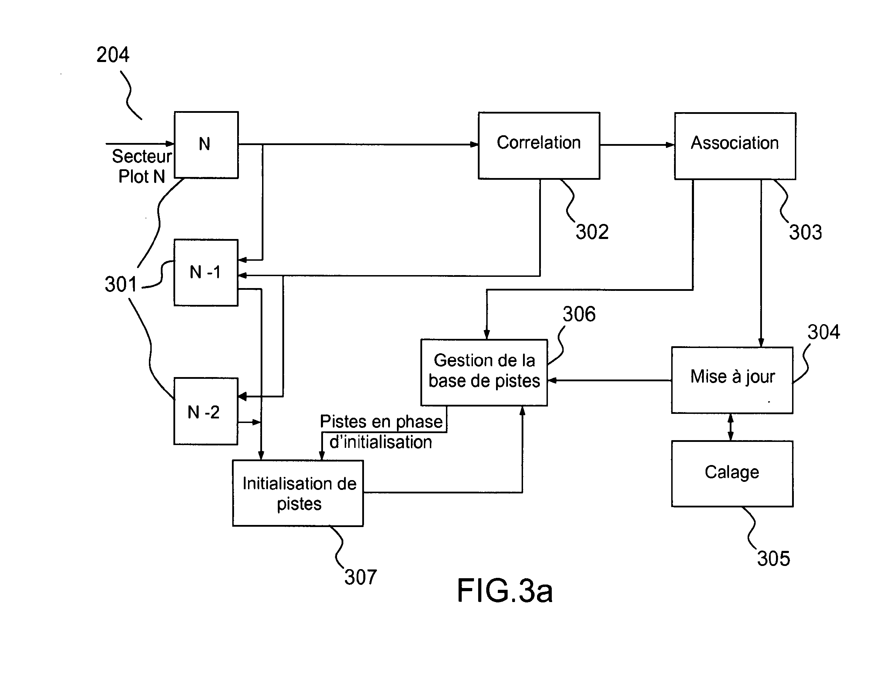

Le Kernel 204 effectue tous les traitements sur les données d'entrée prétraitées par le dispositif de gestion des données d'entrée 202, et génère des données de sortie mises en forme par le dispositif de gestion des données de sortie 203. Le fonctionnement du Kernel est décrit plus précisément ci-après en référence à la figure 3a. Les données issues du dispositif de gestion des données de sortie 203 sont par exemple envoyées vers une interface de visualisation destinée aux contrôleurs aériens, mais aussi vers la station d'émission de type TIS-B 105.

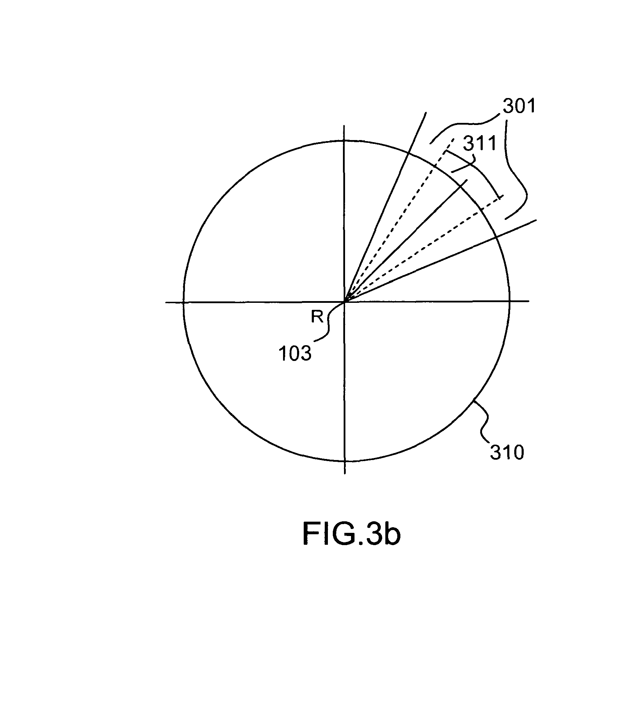

Un premier temps de latence significatif est imputable à la transmission des données en amont du dispositif de gestion des données d'entrée 202. Ce premier temps de latence est inhérent aux radars et capteurs utilisés, aux traitements que ceux-ci peuvent réaliser sur les signaux qu'ils reçoivent, ainsi qu'à la transmission de leurs données de sortie jusqu'au centre ATC 101. Ce premier temps de latence est généralement plus important pour ce qui concerne les radars de surveillance primaires et secondaires. Typiquement, ce premier temps de latence peut être de l'ordre de 2 secondes. Ce premier temps de latence est malheureusement difficilement compressible, à moins de remettre en cause la structure des radars et des lignes de transmission. Or le temps requis par la norme DO-286B - TIS-B MASPS précitée et nécessaire à l'efficacité du système TIS-B, en ce qui concerne le temps total de latence comprenant le premier temps de latence en amont du dispositif de gestion des données d'entrée 202, le temps de latence introduit par le traitement au niveau du Kernel 204, le temps de latence introduit par le dispositif de gestion des données de sortie 203, la transmission des données jusqu'à la station d'émission TIS-B 105 et la mise en forme de ces données avant émission par celle-ci, est de l'ordre de 3,25 secondes. Ainsi est-il nécessaire, pour une conformité avec la norme précitée en matière de temps de latence acceptable dans un système TIS-B, que le temps de latence introduit par le traitement au niveau du Kernel 204 soit très court, typiquement inférieur à 850 millisecondes. Cependant les temps de latence introduits par les Kernel actuels, pour le simple traitement des données en provenance de radars de types PSR et SSR, est de l'ordre de la seconde, dans les meilleurs des cas, et peut parfois durer plusieurs secondes selon les types de radars et l'infrastructure des lignes de transmission. Les raisons pour lesquelles les temps de latence introduits par les Kernel actuels sont si importants seront mieux comprises à la lecture de la description donnée en référence aux figures 3a et 3b ci-après.

La figure 3a présente par un diagramme, la structure du noyau d'un système de pistage multi-radar dans un système de pistage de type MPVU, connu de l'état de la technique. Le diagramme présente 3 secteurs angulaires de détection radar, ou secteurs plots 301. Un bloc 302 représente une fonction de corrélation. Un bloc 303 représente une fonction d'association. Un bloc 304 représente une fonction de mise à jour. Un bloc 305 représente une fonction de calage. Un bloc 306 représente une fonction de gestion de la base de pistes. Un bloc 307 représente une fonction d'initialisation des pistes.

La fonction de corrélation, représentée par le bloc 302, a pour objet :

• de sélectionner les pistes multi-radars maintenues pouvant physiquement être mises à jour avec l'un des plots appartenant au secteur plot N 301 du radar 103 dernièrement reçu,
• de créer l'ensemble des couples plot-piste possibles, chaque couple correspondant à l'hypothèse de mise à jour de la piste avec le plot corrélé.

La fonction d'association, représentée par le bloc 303, a pour objet de résoudre, à partir du résultat fourni par la fonction de corrélation 302, des conflits potentiels, par exemple tels que l'attribution d'un unique plot à plusieurs pistes.

La fonction de mise à jour, représentée par le bloc 304, a pour objet de mettre à jour les caractéristiques cinématiques des pistes traitées, à partir du résultat fourni par la fonction d'association 303.

Les résultats de la fonction de mise à jour 304 et de la fonction d'association 303 permettent une mise à jour de la base de pistes, via la fonction de gestion de la base de pistes représentée par le bloc 306.

La fonction de calage, représentée par le bloc 305, a pour objet de corriger les erreurs systématiques, ou biais, commises par les radars lorsqu'ils effectuent la détection d'une cible. A cette fin, un algorithme de calage effectue une estimation, pour chacun des radars produisant des plots mettant à jour des pistes sélectionnées, des biais de mesure en azimut et en distance. Cette estimation permet alors une correction des mesures issues de ces radars.

La fonction d'initialisation, représentée par le bloc 307, a pour objet de créer de nouvelles pistes lorsqu'un nouvel aéronef non représenté par une piste jusqu'ici, apparaît dans la zone d'intérêt du système de contrôle du trafic aérien.

La figure 3b est un schéma représentant le découpage par secteurs angulaires utilisé dans le traitement des informations fournies par des radars dans le cadre d'un système de contrôle du trafic aérien connu de l'état de la technique. Une couverture de détection 310 du radar 103, par exemple, se divise en secteurs plots 301 et en secteurs pistes 311.

La couverture de détection 310 du radar 103 est divisée en secteurs d'égale valeur angulaire. Par exemple, pour la suite de la description, on considérera que le radar comporte 32 secteurs plots de 11,25°, comptés dans le sens inverse du sens trigonométrique, de 0 à 31. Ainsi la valeur angulaire du secteur radar de numéro S se trouve-t-elle comprise dans l'intervalle [S*11,25° ; (S+1)*11,25°]. Chaque fois que l'antenne du radar 103 passe d'un secteur plot à un autre, un message de fin de secteur est produit. Un message "top nord" correspond au passage de l'antenne du radar 103 sur le nord local au radar 103. Il existe certains radars qui ne produisent pas de message de fin de secteur plot, en revanche, tous les radars produisent un message de type "top nord" et/ou de type "secteur 0".

Du point de vue du système de pistage, la couverture de détection de chaque radar qu'il intègre est divisée en secteurs plots 301 et secteurs pistes 311 d'égale valeur angulaire. Chaque radar comporte 16 secteurs plots et 16 secteurs pistes de 22,5°, comptés dans le sens inverse du sens trigonométrique de 0 à 15. Les secteurs plots 301 et les secteurs pistes 311 sont décalés angulairement les uns par rapport aux autres d'une valeur angulaire correspondant à un demi-secteur. Ainsi le secteur pistes N 311 est recouvert par les secteurs plots 301 N-1 et N. Le secteur plot N 301 du radar 103 comprend l'ensemble des plots pistés issus du radar 103, dont l'azimut appartient à l'intervalle [N*22,5° ; (N+1)*22.5°]. Le secteur piste N 311 comprend l'ensemble des pistes multi-radar appartenant à la couverture de détection 310 du radar 103, et dont l'azimut par rapport à ce radar appartient à l'intervalle [N*22,5° + 11,25° ; (N+1)*22,5° + 11,25°].

Les secteurs plots 301 et secteurs pistes 311 sont les unités de traitement de base de la poursuite pour un système de pistage. Dans la suite de cette description, les termes "secteurs plots" et "secteurs pistes" désignent des secteurs plots et des secteurs pistes internes à la poursuite multi-radar.

Le recouvrement des secteurs plots et des secteurs pistes permet d'affirmer que :

- un plot du secteur N corrèle avec une piste du secteur N et/ou N+1 ;
- si un plot du secteur N corrèle avec une piste du secteur N, cette piste peut être corrélée avec un plot du secteur N-1. Ainsi, afin d'assurer que tous les plots corrélant avec cette piste sont pris en considération, il est nécessaire de considérer les plots des secteurs plots N et N-1, ce qui concrètement se traduit par la nécessité de recourir à la mise en mémoire tampon d'un secteur plot ;
- si un plot du secteur plot N corrèle avec une piste du secteur piste N+1, cette piste peut aussi corréler avec un plot du secteur plot N+1. Ainsi, afin de s'assurer que tous les plots corrélant avec cette piste sont pris en considération, il est nécessaire de considérer les plots des secteurs plots N et N+1, et ainsi recourir à la mise en mémoire tampon d'un secteur plot.

Les plots des secteurs plots N-2 et N-1 sont utilisés pour mettre à jour ou créer des pistes des secteurs pistes N-2 et N-1. En outre, pour confirmer l'association d'un plot du secteur plot N à une piste du secteur piste N ou N+1, il est nécessaire que toutes les pistes de tous ces secteurs et tous les plots corrélés à ces pistes soient pris en considération. Il s'agit du pire cas, où trois secteurs de mémoire tampon sont nécessaires. Dans la plupart des cas, le traitement d'association peut être réalisé en utilisant 1 ou 2 secteurs. Il est en effet nécessaire d'attendre un secteur plot afin de s'assurer de la disponibilité de tous les plots et toutes les pistes à mettre en concurrence. Cette mesure permet d'éviter des effets de bord causés par des détections à la frontière entre deux secteurs plots : il serait par exemple possible d'associer un plot du secteur N à une piste pour laquelle la détection est en fait dans le secteur plot N-1.

Dans un but de simplification des traitements, et afin de présenter les données sous une forme synthétique, un système de pistage multi-radar a recours à un radar fictif. Le radar fictif est un radar qui n'existe pas physiquement, mais qui est géré en interne par le système de pistage. Il est décrit comme un radar de portée infinie, c'est à dire détectant l'ensemble du domaine d'intérêt du système de pistage, centré sur le centre système du système de pistage, et sa période est légèrement inférieure à la période du radar le plus rapide intégré par le système de pistage.

Le système de pistage génère donc en interne des messages de fin de secteur du radar fictif. Ces synchronisations vont permettre, indépendamment des messages radar reçus, de séquencer les traitements généraux du système de pistage. Il permet entre autres la gestion des états radar ou encore d'activer des traitements périodiques de gestion des pistes multi-radar élaborés par la poursuite du système.

Une piste multi-radar est créée et maintenue jusqu'à sa mort en utilisant des plots fournis par les différents radars.

Une piste peut avoir plusieurs états :

- Etat « confirmé » : il s'agit d'une piste ayant été traitée par la fonction d'initialisation automatique des pistes et qui est jugée « sûre ». En d'autres termes, cette piste est considérée comme représentative d'un aéronef réellement présent dans la couverture de détection et jusqu'à présent inconnue du système ;
- Etat « en initialisation » : il s'agit d'une piste en cours de traitement par la fonction et non encore confirmée.

Si l'on utilise un système de radars actuel dans le cadre d'un service TIS-B, la latence théorique introduite par ce système est donnée par la formule suivante :

$$t_{latence} = ((S_s + R) \times N) / 360) * T_{radar} + P \text{ secondes,}$$

où :

Ss est la taille d'un secteur en degrés,
R est la taille du recouvrement de secteurs plots/pistes en degrés,
$T_{radar}$ est la période de révolution du radar en secondes,
N est le nombre maximum de secteurs de mémoire tampon nécessaires en entrée du traitement de pistage ; ce nombre est propre à chaque radar connecté au système de pistage ($1 < N \leq 8$),
P est le délai en secondes, de traitement introduit par la surcharge CPU (typiquement 200 ms).

Si l'on considère, par exemple, le cas d'un radar dont la période de révolution est de 12 secondes, avec un nombre de secteurs de mémoire tampon égal à 1 (cela suppose que tous les plots radar sont reçus dans le bon secteur, et que tous les plots sont reçus en même temps), la latence minimale introduite est de 2,25 secondes, sans compter le temps lié à l'exécution du traitement.

Si l'on considère, par exemple, le cas d'un radar dont la période de révolution est de 4 secondes, avec un nombre de secteurs de mémoire tampon égal à 1, la latence minimale introduite est de 750 millisecondes, sans compter le temps lié à l'exécution du traitement.

Or il est rappelé ici que la latence maximale allouée à un système de pistage dans le cadre d'un service TIS-B est de 850 millisecondes.

Le séquencement du traitement de pistage multi-radar peut se définir comme suit :

• réception du secteur plot N du radar R,

Traitement des pistes confirmées :

• corrélation des pistes confirmées du secteur piste N du radar R avec les plots des secteurs N et N-1,
• association d'un plot à une piste, pour les plots corrélés,
• traitement des captures et gestion des manoeuvres,
• mise à jour des pistes associées à un plot,
• gestion des pistes confirmées.

Traitement des pistes iuste confirmées :

• corrélation des pistes confirmées lors de leur mise à jour précédente, du secteur piste N-1 du radar R avec les plots des secteurs N-1 et N-2,
• association d'un plot à une piste, pour les plots corrélés,
• traitement des captures et gestion des manoeuvres,
• mise à jour des pistes associées à un plot,
• gestion des pistes confirmées.

Traitement des pistes en initialisation :

• corrélation des pistes en initialisation du secteur piste N-1 du radar R avec les plots des secteurs N-1 et N-2,
• association d'un plot à chaque piste, pour les plots corrélés,
• estimation des pistes associées à un plot,
• gestion des pistes en initialisation,

- création des pistes avec les plots restants du secteur N-2,

<u>Chaînage des pistes du radar R appartenant au secteur N+8,</u> qui s'explique par le fait que, au maximum, la mise en mémoire tampon est de 8 secteurs selon les traitements connus de l'état de la technique. Cela signifie que l'on peut attendre l'équivalent temporel de 8 secteurs, donc que certaines pistes peuvent être mises à jour avec jusqu'à l'équivalent temporel de 8 secteurs après la réception du plot. Le chaînage n'est donc effectué que lorsque l'on est sûr que la mise à jour a bien été effectuée pour cette piste.

L'acquisition d'un nouveau secteur plot N déclenche le traitement des pistes confirmées chaînées dans le secteur piste N du radar concerné. Au cours de la phase de corrélation-association, les pistes confirmées du secteur N sont comparées dans le référentiel du radar, aux plots du nouveau secteur plot N, ainsi qu'aux plots restants du secteur plot N-1 (c'est-à-dire les plots n'ayant pas servi à la mise à jour d'une piste auparavant).

En sortie de la phase de corrélation-association, des couples plots-pistes ont été formés ; l'algorithme de prévention des captures vérifie alors que ces associations sont valides et l'on procède éventuellement aux dédoublements d'hypothèses de pistes afin de gérer les possibilités d'évolution des cibles (composante unique ou composante principale / composante manoeuvrante).

Ensuite, chaque piste associée à un plot est mise à jour avec les informations de ce plot. La gestion des pistes permet de compléter la mise à jour de l'ensemble des informations les concernant : gestion des manoeuvres, identification, gestion des codes de type IFF, variance associée, ainsi que l'abandon de certaines pistes.

A la fin des traitements, le secteur plot N ne contient plus que les plots n'ayant pas été utilisés pour une mise à jour de piste. Ces plots peuvent correspondre à la détection de cibles représentées par des pistes confirmées du secteur piste N+1 ; ils seront remis en jeu lors de la réception du secteur plots N+1.

En revanche, les plots restants dans le secteur N-1, ne peuvent plus être attribués à des pistes confirmées puisqu'ils ont déjà été comparés à l'ensemble des pistes confirmées susceptibles de leur être associées.

A l'issue du traitement des pistes confirmées du secteur N, est effectué celui des pistes ayant été confirmées lors de leur mise à jour précédente ; les traitements mis en oeuvre sont les mêmes que ceux des pistes confirmées.

Cette phase est rendue nécessaire pour gérer les problèmes aux frontières lors de la transition piste en initialisation / piste confirmée, et éviter que ces nouvelles pistes confirmées, de par l'ordre d'arrivée des secteurs plots, ne soient mises à jour avec des détections qui les concernent.

Dès lors, sont effectués les traitements des pistes en cours d'initialisation du secteur piste N-1 du radar concerné, avec les plots restants des secteurs plots N-1 et N-2 : corrélation - association, mise à jour des pistes associées à un plot, et gestion des pistes en initialisation (promotion : c'est-à-dire le passage de l'état d'initialisation à l'état confirmée, gestion des codes IFF, abandon).

Dans le secteur plot N-1 ne restent que les plots n'ayant pas été utilisés pour une mise à jour de piste. Ces plots peuvent correspondre à des cibles représentées par des pistes en initialisation du secteur piste N et seront en jeu lors de la réception du secteur plots N+1.

Les plots restants du secteur N-2 n'ont servi à la mise à jour d'aucune piste, confirmée ou en cours d'initialisation, mais peuvent correspondre à des pistes encore inconnues du pistage : une tentative de création de piste leur est attribuée.

Enfin, les pistes du secteur piste N+8 du radar sont rechaînées. Les traitements déclenchés par la réception du secteur plot N sont terminés. La poursuite est alors prête à traiter un nouveau secteur plot.

Les algorithmes de corrélation, en eux-mêmes connus de l'homme du métier, opèrent sur la base de critères de proximités entre plots et pistes, selon un découpage de l'espace d'intérêt propre à chaque radar, par des cellules divisant des secteurs angulaires divisant la couverture du radar. Ainsi les cellules situées en proximité du centre radar, ont-elles des dimensions moindres comparées aux cellules plus éloignées. Cette disparité entraîne des problèmes bien connus de détections manquées, ou bien d'impossibilité de corrélation de plots avec des pistes, pour les cibles évoluant en proximité verticale du centre radar.

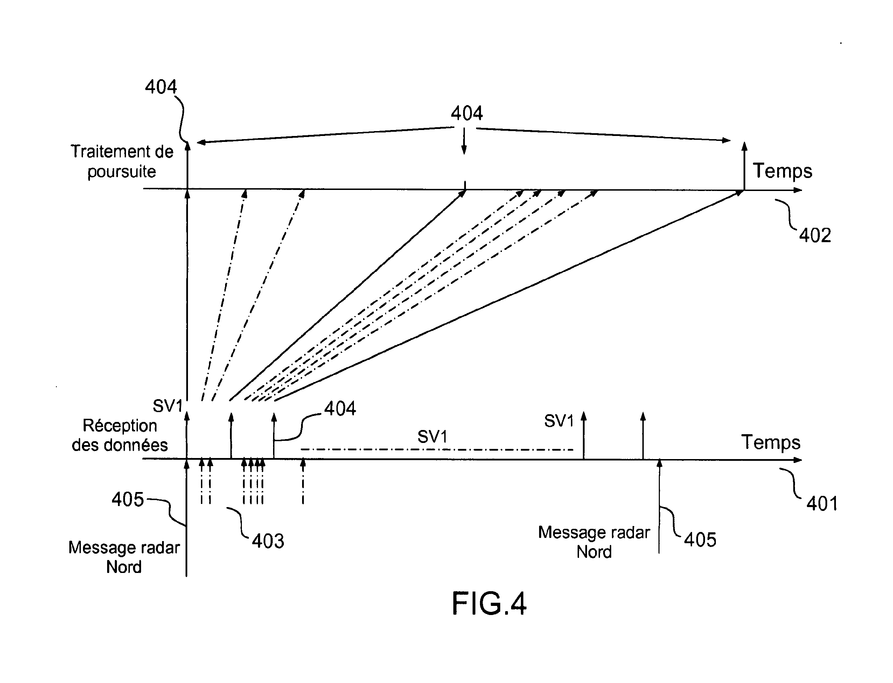

La figure 4 présente un diagramme temporel représentant un exemple de séquencement du traitement des données entrantes dans le cadre d'un système de pistage multi-capteur selon l'invention. Un premier diagramme de temps 401 représente les données reçues en provenance d'un radar, entre deux tops Nord 405. Un ensemble de plots 403 sont détectés durant cet intervalle. L'intervalle est découpé en secteurs virtuels internes ou SVI 404. Un second diagramme temporel représente le séquencement du traitement de poursuite selon l'invention.

Dans le système de pistage proposé par la présente invention, contrairement aux systèmes de pistage connus de l'état de la technique, un plot radar entrant 403 n'est plus mis en mémoire tampon, mais directement envoyé aux fonctions de pistage internes, ce qui permet l'économie d'au moins un secteur de mémoire tampon.

Dès qu'un plot 403 est reçu par le traitement de poursuite multi-radars, il est stocké dans une mémoire tampon jusqu'à la réception d'un secteur virtuel interne 404. Les SVI 404 sont générés en interne via l'utilisation d'un compteur de temps. La période d'émission d'un tel événement est par exemple de 187,5 millisecondes, ce qui correspond à un radar dont la période de révolution est de 3 secondes, et comprenant 16 SVI.

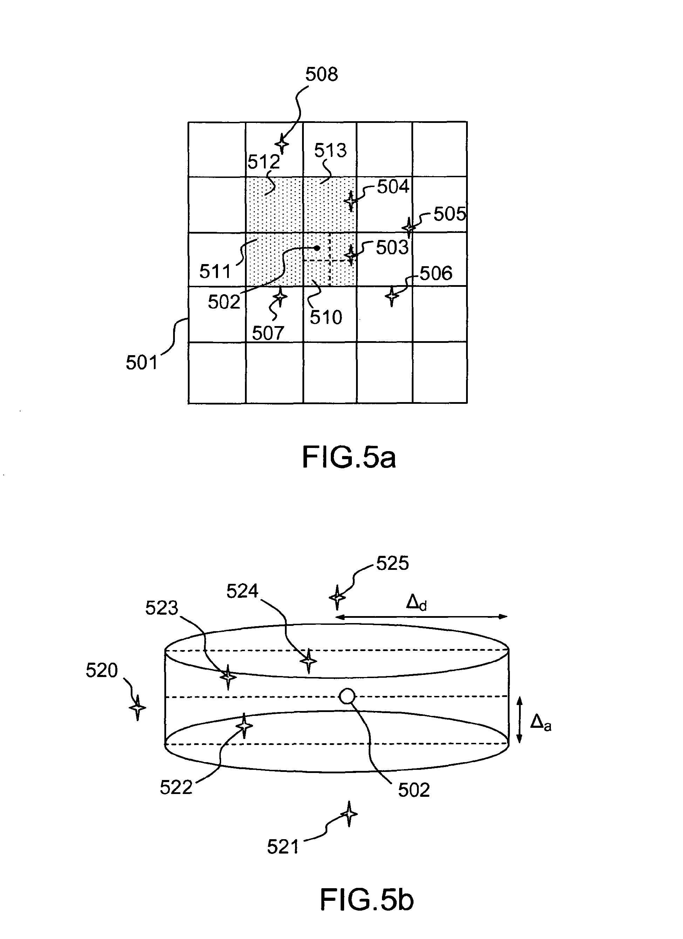

La réception d'un SVI 404 déclenche le traitement de poursuite multi-radar, avec utilisation des plots précédemment stockés. Selon la présente invention, les plots et les pistes ne sont plus chaînés et traités en fonction de secteurs plots ou secteurs pistes, mais en fonction de leur appartenance à une cellule d'une grille système. Cette grille système est décrite ci-après en référence aux figures 5a et 5b.

A la réception d'un SVI 404 par le système de traitement, les traitements de corrélation - association sont démarrés sur la base des plots 403 stockés depuis le SVI 404 précédent.

En fonction du délai de latence du plot et en fonction de la date du SVI, le plot est conservé dans la mémoire tampon afin d'attendre d'autres plots concurrents pour la phase de corrélation et qui peuvent alors être associés à la piste.

Les figures 5a et 5b présentent des schémas représentatifs du procédé de corrélation mis en oeuvre dans un système de pistage multi-capteur selon l'invention. Dans la figure 5a, différents exemples d'aperçus de l'espace d'intérêt, représenté en projection, par exemple sur un plan stéréographique, par une grille 501 découpée en une pluralité de cellules rectangulaires. Avantageusement, les cellules sont de forme carrée, par exemple de 10 Nm de côté. Un plot radar 502 est représenté dans une cellule 510. La cellule 510 comprend notamment des cellules adjacentes 511, 512 et 513. Des pistes 503 et 504 appartiennent respectivement à la cellule 510 et à une des cellules adjacentes 504. Des pistes 505 à 508 appartiennent à d'autres cellules plus ou moins proches de la cellule 510.

Les cellules adjacentes à une cellule carrée sont par exemple définies comme les cellules ayant un sommet ou un côté en commun avec cette cellule.

Le séquencement du traitement de pistage multi-radar selon l'invention peut se définir comme suit :

Traitement de corrélation-association :

Sur réception d'un SVI 404, les traitements de corrélation et d'association sont activés. Selon un premier critère de corrélation, les pistes chaînées dans les cellules de la grille 501 les plus proches de celle 510 dans laquelle se trouve le plot radar 502 sont déclarées candidates pour la corrélation à ce plot : par exemple, les pistes situées dans les cellules adjacentes à la cellule 510 dans laquelle se trouve le plot radar 502 sont déclarées candidates pour la corrélation : soit les pistes 503, 504, 505, 506 et 507 dans l'exemple de la figure.

Avantageusement, la cellule 510 peut être subdivisée en 4 sous-cellules, et seules les sous-cellules de la cellule 510 et les cellules adjacentes à la sous-cellule contenant le plot radar 502 sont déclarées candidates. Les cellules adjacentes à une subdivision sont les cellules de la grille bidimensionnelle ayant un côté ou un sommet en commun avec le carré défini par la subdivision de la cellule. Dans l'exemple de la figure, les cellules 510, 511, 512 et 513 sont déclarées candidates. Ainsi les pistes contenues dans ces cellules, soit les pistes 503 et 504, sont potentiellement corrélées au plot radar 502.

La figure 5b illustre un second critère qui peut être appliqué dans la phase de corrélation. Dans la figure, un plot radar 502 est représenté dans un espace tridimensionnel en perspective. 6 pistes 520 à 525 ont été retenues selon le premier critère de corrélation précité.

Un second critère de corrélation plus discriminant, basé sur une différence en position prenant en compte l'altitude des pistes, aide à réduire le nombre de pistes sélectionnées pour la corrélation suivant le premier critère. Par exemple, peuvent être discriminées pour la corrélation, les pistes dont l'altitude diffère de l'altitude du plot radar 502 d'une altitude supérieure à une valeur déterminée $\Delta_d$, et/ou sont éloignées dans le plan stéréographique d'une distance supérieure à une valeur déterminée $\Delta_a$. Dans l'exemple de la figure, seules les pistes 522, 523 et 524 sont retenues.

Les plots retenus pour la corrélation sont tous les plots précédemment stockés dans la mémoire tampon, alors que les pistes retenues sont l'union de toutes les pistes retenues pour chaque plot. Le traitement de corrélation, hormis le processus de sélection des plots et des pistes reste identique au processus connu de l'état de la technique cité plus haut en référence aux figures 3a et 3b.

Après la phase de corrélation, la phase d'association est exécutée. Elle est basée sur des principes similaires au traitement d'association connu de l'état de la technique et décrit plus haut en référence aux figures 3a et 3b, exception faite de l'ajout d'un critère supplémentaire basé sur la différence de temps entre l'heure de réception du plot radar et l'heure de réception du message SVI qui a déclenché les traitements de corrélation-association :

- si la différence de temps est inférieure à un seuil déterminé, par exemple fixé à 400ms, alors l'association du plot à la piste n'est pas confirmée, et le plot reste dans la mémoire tampon. La piste n'est alors pas mise à jour ;
- si la différence de temps est supérieure au seuil, alors l'association est confirmée. Le plot est alors associé à la piste ; une mise à jour est effectuée, et le plot est retiré de la mémoire tampon.

Après le traitement d'association, un plot peut donc être :

- associé à une piste : une mise à jour est alors effectuée (il est retiré de la mémoire tampon),
- non associé à une piste à cause d'une différence de temps trop faible : le plot reste alors dans la mémoire tampon,
- non corrélé à aucune des pistes existantes dans la base de pistes : le plot est alors envoyé au traitement d'initialisation et est à l'origine de la création d'une nouvelle piste.

La présente invention permet de résoudre le problème technique posé en permettant une réduction significative du temps de latence introduit par le système de pistage multi-radar, de manière à le rendre compatible avec les exigences requises pour un service TIS-B.

Le temps de latence théorique pour un système de pistage selon l'invention est donné par la formule suivante :

$$t_{latence} = ((SVI_d \times N) + D + P) \text{ secondes,}$$

où :

$SVI_d$ est la période d'envoi des messages SVI en secondes (par exemple : 0,1875 s),
N est le nombre de SVI d'attente (par exemple fixé à 1 par défaut),
D est le délai en secondes, de latence plot autorisé (par exemple fixé à 0,400 s par défaut),
P est le délai en secondes, de traitement introduit par la surcharge CPU (typiquement : 0,2 s).

La latence d'un système de pistage multi-radar basé sur la méthode selon la présente invention n'est pas dépendante des caractéristiques des radars connectés au système, et a une durée fixe ; il est à noter que cette méthode peut être tout aussi bien appliquée aux informations fournies par tous les autres types de capteurs impliqués dans le contrôle du trafic aérien.

En utilisant les valeurs par défaut citées plus haut à titre d'exemple, la latence s'établit à 787,5 ms, quel que soit le radar considéré. Cette latence est inférieure à la latence allouée à un système de pistage utilisé dans le cadre d'une application de type TIS-B.

La méthode de réduction du temps de latence selon l'invention permet des performances jusqu'ici jamais atteintes par aucun système de pistage multi-radar, et permet en outre :

- de s'affranchir des problèmes de « time disorders » introduits par les réseaux transportant les données radar,
- de ne pas être dépendant d'une sectorisation radar, soit d'envois par le radar de messages de fin de secteur,
- un traitement à la volée qui assure la prise en compte d'un maximum de plots indépendamment des problèmes inhérents au réseau de transport des données radar et des problèmes de tête radar,
- pour des cibles situées à proximité du centre radar, de résoudre une grande partie des problèmes pour les trajectoires à fort défilement.

**Revendications**

1. Méthode de traitement de poursuite de cibles aériennes évoluant dans un espace d'intérêt détectées par une pluralité de capteurs (102, 103), **caractérisée en ce que** :

   • les détections en provenance des capteurs (102, 103) sont synthétisées sous la forme de détections d'un unique radar fictif synchronisé par une pluralité de secteurs virtuels internes (404) temporels de durée déterminée,
   • la méthode comprend une étape préalable établissant une grille bidimensionnelle (501) d'un plan de projection stéréographique de l'espace d'intérêt, la grille bidimensionnelle (501) étant divisée en une pluralité de cellules (510, 511, 512) de forme rectangulaire,
   • le système de pistage mémorise dans une mémoire tampon toutes les détections (403) réalisées pendant au moins un secteur virtuel interne (404),
   • une fonction de corrélation (302) opère une corrélation des détections (502) avec des pistes (503, 504) sur la base d'un premier critère de proximité entre les cellules de la grille bidimensionnelle (501) contenant les détections (502) et les pistes (503, 504), la fonction de corrélation (302) étant déclenchée par un message de fin du secteur virtuel interne (404), la corrélation étant effectuée sur la base des détections mémorisées durant le secteur virtuel interne (404).

2. Méthode de traitement de poursuite multi-capteur selon la revendication 1, **caractérisée en ce qu'**elle comprend également une fonction d'association (303) associant les détections à des pistes sur la base d'un critère supplémentaire de différence de temps entre l'instant de réception d'une détection radar et l'instant de réception du message de fin de secteur virtuel interne (404) ayant déclenché les traitements de corrélation et d'association (302, 303), le critère permettant une confirmation de l'association de la détection (502) à la piste (503, 504), une mise à jour de la piste (503, 504) et la suppression de la détection (502) de la mémoire tampon, si ladite différence de temps est supérieure à un seuil déterminé, le critère permettant de conserver la détection (502) dans la mémoire tampon pour un traitement ultérieur, si la différence de temps est inférieure au seuil déterminé.

3. Méthode de traitement de poursuite multi-capteur selon l'une quelconque des revendications précédentes, **caractérisée en ce que** les cellules (510, 511, 512) de forme rectangulaire ont une forme carrée dont le côté a une longueur prédéterminée.

4. Méthode de traitement de poursuite multi-capteur selon l'une quelconque des revendications précédentes, **caractérisée en ce que** le premier critère de proximité permet d'élire des pistes candidates (503, 504, 505) à la corrélation avec un point donné (502) correspondant à une détection, toutes les pistes situées dans les 8 cellules adjacentes (511, 512, 513) à la cellule (510) contenant le point donné (502), et dans ladite cellule (510).

5. Méthode de traitement de poursuite multi-capteur selon la revendication 4, **caractérisée en ce que** le premier critère de proximité permet d'élire des pistes candidates (503, 504) à la corrélation avec un point donné (502) correspondant à une détection, toutes les pistes situées dans les 3 cellules adjacentes à une des 4 sous-divisions identiques de la cellule (510) contenant le point donné (502), et dans ladite cellule (510).

6. Système de contrôle du trafic aérien **caractérisé en ce qu'**il met en oeuvre une méthode de traitement de poursuite multi-capteur selon l'une quelconque des revendications précédentes.


**Patentansprüche**

1. Verfahren zum Verarbeiten der Verfolgung von Luftzielen, die sich in einem Raum von Interesse bewegen und von mehreren Sensoren (102, 103) eifasst werden, **dadurch gekennzeichnet, dass**:

   • die von den Sensoren (102, 103) kommenden Erkennungen in Form von Erkennungen eines einzelnen fiktiven Radars synthetisiert werden, das durch mehrere interne virtuelle Zeitsektoren (404) von bestimmter Dauer synchronisiert wird;
   • das Verfahren einen Vorabschritt des Erstellens eines zweidimensionalen Gitters (501) einer stereografischen Projektionsebene des Raums von Interesse beinhaltet, wobei das zweidimensionale Gitter (501) in mehrere rechteckige Zellen (510, 511, 512) unterteilt ist;
   • das Velfolgungssystem alle in wenigstens einem virtuellen internen Sektor (404) gemachten Erkennungen (403) in einem Pufferspeicher speichert;
   • eine Korrelationsfunktion (302) eine Korrelation von Erkennungen (502) mit den Bahnen (503, 504) auf der Basis eines ersten Nähekriteriums zwischen den Zellen des zweidimensionalen Gitters (501) durchführt, die die Erkennungen (502) und die Bahnen (503, 504) enthalten, wobei die Korrelationsfunktion (302) durch eine Nachricht über das Ende des internen virtuellen Sektors (404) ausgelöst wird, wobei die Korrelation auf der Basis von während des internen virtuellen Sektors (404) gespeicherten Erkennungen durchgeführt wird.

2. Verfahren zum Verarbeiten von Multisensor-Verfolgung nach Anspruch 1, **dadurch gekennzeichnet, dass** es ferner Folgendes beinhaltet: eine Assoziationsfunktion (303), die die Erkennungen mit Bahnen auf der Basis eines zusätzlichen Kriteriums der Zeitdifferenz zwischen dem Augenblick des Empfangs einer Radarerkennung und dem Augenblick des Empfangs der Nachricht über das Ende des internen virtuellen Sektors (404) assoziiert, der die Korrelations- und Assoziationsverarbeitungen (302, 303) ausgelöst hat, wobei das Kriterium eine Bestätigung der Assoziation der Erkennung (502) mit der Bahn (503, 504) zulässt, Aktualisieren der Bahn (503, 504) und Entfernen der Erkennung (502) aus dem Pufferspeicher, wenn die Zeitdifferenz größer als eine vorbestimmte Schwelle ist, wobei das Kriterium es zulässt, dass die Erkennung (502) für eine nachfolgende Bearbeitung im Pufferspeicher gehalten wird, wenn die Zeitdifferenz geringer ist als die bestimmte Schwelle.

3. Verfahren zum Verarbeiten von Multisensor-Verfolgung nach einem der vorherigen Ansprüche, **dadurch gekennzeichnet, dass** die rechteckigen Zellen (510, 511, 512) eine quadratische Form mit einer vorbestimmten Seitenlänge haben.

4. Verfahren zum Verarbeiten von Multisensor-Verfolgung nach einem der vorherigen Ansprüche, **dadurch gekenn-**

zeichnet, dass das erste Nähekriterium die Auswahl von Kandidatenbahnen (503, 504, 505) für die Korrelation mit einem einer Erkennung entsprechenden gegebenen Punkt (502) zulässt, wobei sich alle Bahnen in den 8 Zellen (511, 512, 513) neben der den gegebenen Punkt (502) enthaltenden Zelle (510) und in der Zelle (510) befinden.

5. Verfahren zum Verarbeiten von Multisensor-Verfolgung nach Anspruch 4, **dadurch gekennzeichnet, dass** das erste Nähekriterium die Auswahl von Kandidatenbahnen (503, 504) für die Korrelation mit einem einer Erkennung entsprechenden gegebenen Punkt (502) zulässt, wobei sich alle Bahnen in den 3 Zellen neben einer von 4 identischen Unterteilungen der Zelle (510), die den gegebenen Punkt (502) enthält, und in der Zelle (510) befinden.

6. Flugverkehrskontrollsystem, **dadurch gekennzeichnet, dass** es ein Verfahren zum Verarbeiten von Multisensor-Verfolgung nach einem der vorherigen Ansprüche implementiert.

## Claims

1. A method for processing the tracking of airborne targets moving in a space of interest and detected by a plurality of sensors (102, 103), **characterised in that**:

   • the detections from sensors (102, 103) are synthetized in the form of detections of a single dummy radar that is synchronised by a plurality of internal virtual time sectors (404) of determined duration;
   • said method comprises a prior step establishing a two-dimensional grid (501) of a stereographic projection plane of the space of interest, said two-dimensional grid (501) being divided into a plurality of cells (510, 511, 512) of rectangular shape;
   • the tracking system stores all of the detections (403) completed for at least one internal virtual sector (404) in a buffer memory;
   • a correlation function (302) performs a correlation of detections (502) with tracks (503, 504) on the basis of a first proximity criterion between the cells of said two-dimensional grid (501) containing said detections (502) and said tracks (503, 504), said correlation function (302) being triggered by a message indicating the end of said internal virtual sector (404), said correlation being carried out on the basis of detections stored during said internal virtual sector (404).

2. The method for processing multi-sensor tracking according to claim 1, **characterised in that** it further comprises an association function (303) associating the detections with tracks on the basis of an additional criterion of the time difference between the moment of reception of a radar detection and the moment of reception of the message indicating the end of said internal virtual sector (404) having triggered the correlation and association processing (302, 303), said criterion allowing the association of said detection (502) with said track (503, 504) to be confirmed, an update of said track (503, 504) and a removal of said detection (502) from said buffer memory, if said time difference is greater than a determined threshold, said criterion allowing said detection (502) to be retained in said buffer memory for subsequent processing if the time difference is lower than the determined threshold.

3. The method for processing multi-sensor tracking according to any one of the preceding claims, **characterised in that** said rectangular cells (510, 511, 512) are of square shape, with sides of predetermined length.

4. The method for processing multi-sensor tracking according to any one of the preceding claims, **characterised in that** said first proximity criterion allows for the election of candidate tracks (503, 504, 505) for the correlation with a given point (502) corresponding to a detection, all of the tracks located in the 8 cells (511, 512, 513) adjacent to the cell (510) containing said given point (502) and in said cell (510).

5. The method for processing multi-sensor tracking according to claim 4, **characterised in that** said first proximity criterion allows for the election of candidate tracks (503, 504) for the correlation with a given point (502) corresponding to a detection, all of the tracks being located in the 3 cells adjacent to one of 4 identical sub-divisions of said cell (510) containing said given point (502) and in said cell (510).

6. An air traffic control system, **characterised in that** it implements a method for processing multi-sensor tracking according to any one of the preceding claims.

**FIG.1**

**FIG.2**

FIG.3a

EP 2 202 534 B1

FIG.3b

FIG.4

EP 2 202 534 B1

FIG.5a

FIG.5b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0926511 A
- EP 0351654 A

- US 6573858 B